# EUROPEAN PATENT APPLICATION

(11) **EP 3 382 622 A1**
(43) Date of publication of application: **03.10.2018**
(21) Application number: 16868550.1
(22) Date of filing: 22.11.2016
(51) Int. Cl.: G06Q 10/10, G06Q 10/02, G06Q 30/02

(54) **RESERVATION PROCESSING DEVICE, RESERVATION PROCESSING METHOD, AND RESERVATION PROCESSING PROGRAM**

(30) Priority: 27.11.2015 JP 2015232207
(71) Applicant: Recruit Holdings Co., Ltd., Tokyo 104-0061 (JP)
(72) Inventor: YUMIBA, Hirotsugu, Tokyo 100-6640 (JP)
(74) Representative: EIP
(86) International application number: PCT/JP2016/084593
(87) International publication number: WO 2017/090607

(57) **Abstract**

An event suitable for the preference of a user is provided at a vacant time in a schedule. Reservable event information regarding an event which is provided by each of providers of different industry types or different business types and is a target of a reservation is stored. Schedule information regarding a schedule of a user is acquired from a reservation applicant terminal. The vacant time of the schedule and preference information regarding the preference of the user are specified based on the acquired schedule information. One or more events capable of being reserved in the vacant time are specified at least by using the vacant time and the preference information which have been specified, from the reservable event information. The specified event is provided to the reservation applicant terminal as an acquisition source of the schedule information used for specifying the event.

## Description

### Cross-Reference to Related Application

This application is based on Japanese Patent Application No. 2015-232207 filed on November 27, 2015, the contents of which are incorporated herein by reference.

### Technical Field

The present invention relates to a reservation processing device, a reservation processing method, and a reservation processing program.

### Background Art

Patent Document 1 discloses a reservation system for reserving an instruction time at a driving school. In the section of "Background Art" in Patent Document 1, it is disclosed that, when schedules of instructors are decided on a schedule table, it is done in consideration of individual schedules of the instructors. As described above, when scheduling, generally, schedules are adjusted not to conflict with each other. Naturally, when a student who is to receive an instruction reserves an instruction time, the student checks her/his own schedule and makes a reservation for a time which is not occupied with any plan.

### Citation List

### Patent Document

Patent Document 1: Japanese Patent Application Laid-Open No. 2002-56106

### Summary

For a user who makes a reservation, it is convenient to provide a mechanism of providing an event suitable for the preference of the user at a vacant time in a schedule in addition to reserving the vacant time while checking the schedule as described in the related art.

To solve the above-described problem, one object of the present invention is to provide a reservation processing device, a reservation processing method, and a reservation processing program in which an event suitable for the preference of a user is capable of being provided at a vacant time in a schedule.

According to an aspect of the present invention, a reservation processing device includes means for storing reservable event information regarding an event which is provided by each of providers of different industry types or different business types and is a target of a reservation, means for acquiring schedule information regarding a schedule of a user, means for specifying a vacant time in the schedule and preference information regarding a preference of the user based on the acquired schedule information, means for specifying one or more events which are capable of being reserved in the vacant time from the stored reservable event information at least by using the vacant time and the preference information which have been specified, and means for providing the specified event to a user terminal as an acquisition source of the schedule information used for specifying the event.

In a case where a plurality of the events is specified, the means for specifying the event may further specify a plurality of the events capable of being reserved together from the plurality of the specified events.

The means for specifying the event may arrange the plurality of the specified events in time series based on a provision time of the event, which is included in the reservable event information, and further specify the plurality of events capable of being reserved together based on provision times and provision places of the events, which are included in the reservable event information, a travel time required to move between provision places, and the vacant time.

The reservation processing device may further include means for acquiring current position information of the user terminal. The means for specifying the event may further use the acquired current position information of the user terminal when specifying the one or more events capable of being reserved in the vacant time.

The reservation processing device may further include means for specifying places set in schedules before and after the vacant time based on the acquired schedule information. The means for specifying the event may further use the specified places when specifying the one or more events capable of being reserved in the vacant time.

In a case where a plurality of the events is specified, the means for providing the event may provide the plurality of events in a state of being arranged in time series.

The reservation processing device may further include means for accepting a reservation for the provided event.

The reservation processing device may further include means for managing reservations for events, which have been accepted, as one integrated reservation in a case where a plurality of the events is specified.

According to another aspect of the present invention, a reservation processing method executed by a reservation processing device includes a step of acquiring schedule information regarding a schedule of a user, a step of specifying a vacant time in the schedule and preference information regarding a preference of the user based on the acquired schedule information, a step of specifying one or more events capable of being reserved in the vacant time at least by using the vacant time and the preference information which have been specified in the specifying step, from reservable event information stored in a storage device that stores the reservable event information regarding an event which is provided by each of providers of different industry types or different business types and is a target of a reservation, and a step of providing the specified event to a user terminal as an acquisition source of the schedule information used for specifying the event.

According to still another aspect of the present invention, a reservation processing program causes a computer to function as means for storing reservable event information regarding an event which is provided by each of providers of different industry types or different business types and is a target of a reservation, means for acquiring schedule information regarding a schedule of a user, means for specifying a vacant time in the schedule and preference information regarding a preference of the user based on the acquired schedule information, means for specifying one or more events capable of being reserved in the vacant time from the stored reservable event information at least by using the vacant time and the preference information which have been specified, and means for providing the specified event to a user terminal as an acquisition source of the schedule information used for specifying the event.

### Advantageous Effects of Invention

According to the disclosure, it is possible to provide an event suitable for the preference of a user at a vacant time in a schedule.

### Brief Description of Drawings

Fig. 1 is a diagram illustrating a configuration of a reservation processing system including a reservation processing server according to an embodiment.
Fig. 2 is a diagram illustrating a configuration of the reservation processing server illustrated in Fig. 1.
Fig. 3 is a flowchart illustrating a series of procedures when an event capable of being reserved at a vacant time in a schedule is provided to a reservation applicant terminal and a reservation for the provided event is managed.

### Description of Embodiments

Hereinafter, an embodiment of the present invention will be described in detail with reference to the drawings. The same components are denoted by the same reference signs and descriptions thereof will not be repeated.

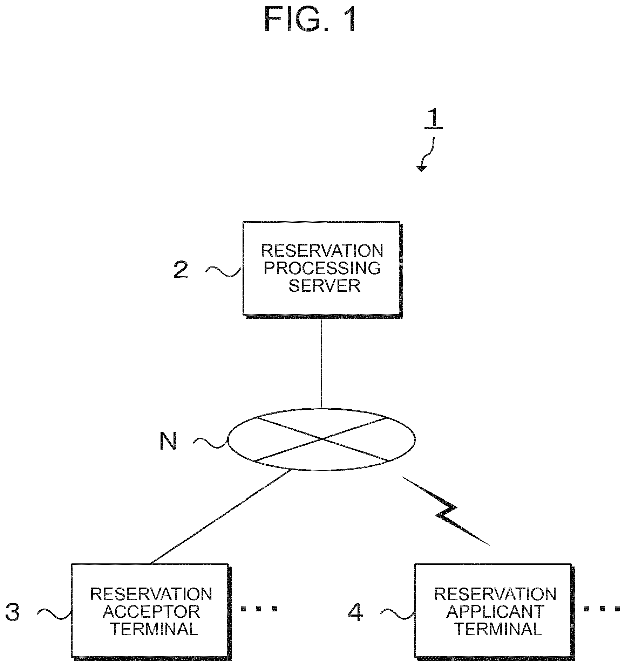

Fig. 1 is a schematic diagram illustrating a configuration of a reservation processing system including a reservation processing server (reservation processing device) according to an embodiment of the present invention.

As illustrated in Fig. 1, a reservation processing system 1 in the embodiment includes a reservation processing server 2, one or more reservation acceptor terminals 3, and one or more reservation applicant terminals 4. Each of the reservation acceptor terminals 3 and the reservation applicant terminals 4 is configured to be capable of communicating with the reservation processing server 2 through a network N.

The reservation acceptor terminal 3 is a terminal device used by a provider who provides a service, as a reservation acceptor who accepts a reservation for an event which will be described later. Regarding the provider which may act as the reservation acceptor, providers of all industry types or all business types are set as a target.

The reservation applicant terminal 4 is a terminal device used by a user who receives the provided service, as a reservation applicant who makes a reservation for an event.

As the event, anything which is capable of serving as a target of a reservation may be provided. As an example, an event is capable of being specified by reservable event information which is generated by setting a reservation frame. Details of the reservable event information will be described later. A method of setting the reservation frame may be determined in accordance with the reservation acceptance type, for example. As an example of the reservation acceptance type, a preset type and a free acceptance type which will be described later may be employed. As the reservation acceptance type, other types may be provided, and any type may be employed.

The preset type means a type in which a reservation from a reservation applicant is accepted by using a reservation frame which has been set in advance by a reservation acceptor. The free acceptance type means a type in which a reservation from a reservation applicant is accepted by causing a reservation applicant to set a desired reservation frame within a service provision time set by a reservation acceptor.

Before the reservation frame is set, a reservation acceptor registers items as follows, for example: a menu item for specifying the contents of a service provided by the reservation acceptor; a resource item as a resource (for example, person, equipment, furniture, and the like) when a service is provided; an item of a resource group to which the resource is capable of belonging; a reservation capacity number item; a reservation acceptance availability date item; and a charge item.

In the preset type, for example, the reservation frame is set in a manner that the reservation acceptor sets a menu item and a time slot in which a service corresponding to the menu item is provided.

In the free acceptance type, for example, the reservation frame is set in a manner that the reservation acceptor sets a service provision time and the reservation applicant designates a desired time slot in the service provision time.

In the embodiment, descriptions will be made on the assumption that a personal computer (PC) is set as the reservation acceptor terminal 3, and a smartphone is set as the reservation applicant terminal 4. However, the invention is not limited thereto. As the reservation acceptor terminal 3 and the reservation applicant terminal 4, for example, a PC, a notebook PC, a tablet terminal, a smartphone, a portable phone, a portable information terminal (PDA), and other terminal devices may be appropriately used.

For example, the reservation processing server 2 is configured by a computer having relatively high operation processing power. The reservation processing server 2 realizes a server function by a predetermined server program operating in the computer. Here, the number of computers constituting the reservation processing server 2 is not necessarily one. The reservation processing server 2 may be configured by a plurality of computers distributed over the network N.

The network N includes a communication network which enables information to be transmitted and received between the reservation processing server 2, the reservation acceptor terminal 3, and the reservation applicant terminal 4. As the network N, for example, any of the Internet, a LAN, a private line, a telephone line, a corporate network, a mobile communication network, Bluetooth (registered trademark), wireless fidelity (WiFi), other communication lines, and combinations thereof may be used. The network N may be wired or wireless.

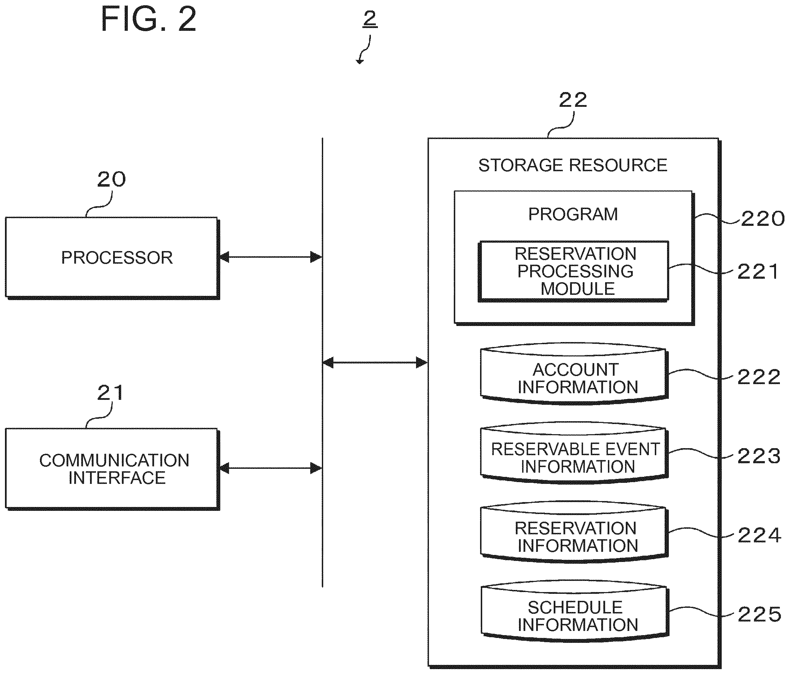

As illustrated in Fig. 2, the reservation processing server 2 includes a processor 20, a communication interface 21, and a storage resource 22, for example.

The processor 20 is configured by an arithmetic logic unit that processes an arithmetic operation, a logical operation, a bit operation, and the like, and various registers. The processor 20 realizes various functions which will be described later, by executing a computer program 220 stored in the storage resource 22. The various registers include, for example, a program counter, a data register, a command register, a general purpose register, and the like.

The communication interface 21 is a hardware module which is connected to the network N and is used for communicating with other terminals on the network N. The communication interface 21 is, for example, a modulator-demodulator such as an ISDN modem, an ADSL modem, a cable modem, an optical modem, and a soft modem.

The storage resource 22 is, for example, a logical device provided by a storage area of a physical device. The physical device is, for example, a computer-readable recording medium such as a disk drive or a semiconductor memory. The storage resource 22 may be constructed by mapping a plurality of physical devices on one logical device or may be constructed by mapping one physical device on a plurality of logical devices. The computer program 220 is stored in the storage resource 22.

An operating system program, a driver program, various types of data, and the like used in processing of the reservation processing server 2 are stored in the storage resource 22 in addition to the computer program 220. Examples of the driver program include a communication interface driver program for controlling the communication interface 21, for example.

As the various types of data, for example, the following is provided: account information 222 regarding an account of a reservation acceptor, registered by the reservation acceptor and an account of a reservation applicant registered by the reservation applicant; reservable event information 223 regarding an event as a target of a reservation registered by the reservation acceptor; reservation information 224 regarding reservation details registered by the reservation applicant; and schedule information 225 regarding a schedule of the reservation applicant, which has been acquired from the reservation applicant terminal 4.

The account information 222 includes account information of the reservation acceptor and account information of the reservation applicant. The account information of the reservation acceptor includes, for example, a user ID item, a password item, a mail address item, a name item, an industry type and business type item, and the like, as data items. The user ID item stores identification information for specifying a reservation acceptor as a provider. The industry type and business type item stores information of specifying an industry type or business type of the reservation acceptor.

The account information of the reservation applicant includes, for example, a user ID item, a password item, a mail address item, a name item, an address item, a contact point item, and the like, as data items. The user ID item stores identification information for specifying a reservation applicant as a user.

The reservable event information 223 includes, for example, a user ID item, an event ID item, a category item, a provision place item, a provision time item, a charge item, a person-in-charge item, a supplementary explanation item, and the like, as data items. The user ID item is similar to the user ID item of the account information of the reservation acceptor. The account information of the reservation acceptor and the reservable event information 223 are capable of being associated with each other by the user ID item.

The event ID item stores, for example, event identification information for specifying an event, such as an event number and an event name. The category item stores information for specifying the category of the event. The category of the event is capable of being provided for each industry type or each business type, or for each type of a provision target. Specifically, a food and beverage establishment, a hospital, a school, a fitness center, a beauty salon, types of food (for example, tempura-soba or zaru-soba to be served at a soba restaurant) served at a food and beverage establishment, and the like correspond to the category of the event. A plurality of classes may be randomly provided in each category. For example, in a case where the category is a food and beverage establishment, restaurants, cafes, pubs, and the like may be provided as lower classes of the food and beverage establishment. A Japanese style, a Chinese style, a Western style, and the like may be provided as lower classes of the restaurants. Further, sushi restaurants, soba restaurants, tempura restaurants, and the like may be provided as lower classes of the Japanese style.

The provision place item stores information for specifying a provision place of the event. The provision time item stores a provision time of the event. The charge item stores the charge for the event. The person-in-charge item stores information for specifying a person in charge on a provider side who provides the event. The supplementary explanation item stores memo-like information regarding an event, for example, such as details of the event and information regarding the preference of a reservation applicant as a target.

The reservation information 224 includes, for example, a reservation ID item, an event ID item, a reservation detail item, a user ID of a reservation applicant, and the like, as data items. The reservation ID item stores identification information for specifying a reservation made by the reservation applicant. The event ID item is an item similar to the event ID item of the reservable event information 223. The reservable event information 223 and the reservation information 224 are capable of being associated with each other by the event ID item.

The reservation detail item stores, for example, information regarding the reservation details such as the number of reserved persons, a reserved course, and a reserved time. The user ID item of a reservation applicant is similar to the user ID item of the account information of the above reservation applicant. The account information of the reservation applicant and the reservation information 224 are capable of being associated with each other by the user ID item. The memo item stores, for example, memo-like information regarding an evaluation of the reservation applicant for a reservation or the reservation, such as a word of mouth.

The schedule information 225 includes, for example, a user ID item of a reservation applicant, a schedule item, and the like as data items. The user ID item of the reservation applicant is similar to the user ID item of the account information of the reservation applicant. The account information of the reservation applicant and the schedule information 225 are capable of being associated with each other by the user ID item. The schedule item stores a schedule of the reservation applicant, which has been acquired from the reservation applicant terminal 4. The schedule includes, for example, the date and time, a place, schedule details, and the like.

The constructions of the account information 222, the reservable event information 223, the reservation information 224, and the schedule information 225 which have been described above, and a combination of the data items included in the above kinds of information are just examples. The constructions of the kinds of information and the combination of the data items of the kinds of information are capable of being appropriately changed in accordance with an operating system.

The computer program 220 is a program for performing predetermined processing. The computer program includes a plurality of software modules which is appropriately called and executed during an operation of the main program of the reservation processing server 2. The software module is a subprogram modularized for performing specific processing. For example, the software module is created by using a procedure, a subroutine, a method, a function, a data structure, and the like.

For example, the computer program 220 includes a reservation processing module 221. A function realized by executing the reservation processing module 221 will be described below.

The reservation processing module 221 receives an account registration of a reservation acceptor as a provider. When the reservation acceptor starts using the reservation processing system 1, the reservation acceptor operates the reservation acceptor terminal 3 to access a predetermined Web page of the reservation processing server 2, and registers account information 222 of the reservation acceptor.

The reservation processing module 221 registers reservable event information 223 regarding an event as a target of a reservation, for the reservation acceptor who has performed the account registration.

The reservation processing module 221 receives an account registration of a reservation applicant. When the reservation applicant starts using the reservation processing system 1, the reservation applicant operates the reservation applicant terminal 4 to access a predetermined Web page of the reservation processing server 2, and registers account information 222 of the reservation applicant.

The reservation processing module 221 acquires the schedule of the reservation applicant from the reservation applicant terminal 4 of the reservation applicant who has performed an account registration and stores the acquired schedule in the schedule information 225. For example, a timing at which the schedule of the reservation applicant is acquired may be periodical, may be a timing at which the schedule is updated by the reservation applicant terminal 4, or may be randomly set.

The reservation processing module 221 specifies the vacant time in the schedule of the reservation applicant and preference information regarding the preference of the reservation applicant, based on the schedule information 225. The preference information is specified, for example, by analyzing details, date and time, a place, and the like of a schedule, which are included in the schedule information of the reservation applicant.

Information used when the preference information is specified is not limited to the schedule information. For example, the preference information may be specified by requesting a questionnaire on the preference from the reservation applicant and analyzing the questionnaire information which is the answer to the questionnaire.

The reservation processing module 221 specifies one or more events capable of being reserved in the vacant time based on the reservable event information 223 by using the vacant time and the preference information which have been specified.

The event may be specified, for example, in a manner that pieces of information stored in the category item, the provision place item, the provision time item, the charge item, and the supplementary explanation item of the reservable event information 223, and the memo item and the like of the reservation information 224 are compared to the preference information and the event is specified based on the reservable event information 223 corresponding to the information coinciding with the preference information.

When the event is specified, the specifying may be performed by further using the current position of the reservation applicant terminal 4 or places set in schedules before and after the vacant time. Thus, it is possible to provide the event in consideration of the position of the reservation applicant. For example, the current position of the reservation applicant terminal 4 may be acquired by using position information of the reservation applicant terminal 4. The position information of the reservation applicant terminal 4 may be acquired by using a global positioning system (GPS), for example.

In a case where a plurality of events capable of being reserved in the vacant time is provided, the reservation processing module 221 may specify events capable of being reserved together, from the plurality of events. The events capable of being reserved together are capable of being specified as follows, for example.

Firstly, the reservation processing module 221 arranges a plurality of events specified as events capable of being reserved at a vacant time, in time series. The provision time of reservable event information 223 may be used for arranging the events in time series.

A plurality of events capable of being reserved together is specified based on the provision time and the provision place of the reservable event information 223, a travel time required to move between provision places, and the specified vacant time.

That is, in a case where a plurality of events capable of being reserved in one vacant time is provided, the reservation processing module 221 arranges the plurality of events in time series based on a time for providing the event, and specifies a plurality of events capable of being reserved together from the plurality of events, based on a time for providing the event, a place at which the event is provided, a travel time required to move between provision places, and the vacant time.

When the travel time is calculated, the travel time may be calculated on the premise that moving means (for example, train, bus, car, or walking) which causes the travel time to be the shortest is used, or the travel time may be calculated on the premise that moving means selected by the reservation applicant is used.

In a case where the current position of the reservation applicant terminal 4 or places before and after the vacant time are specified, events capable of being reserved together may be specified by further using the position or the places. Thus, an event more suitable for an action of the reservation applicant is capable of being specified.

The reservation processing module 221 provides the specified event to the reservation applicant terminal 4. A reservation applicant terminal 4 as a destination to which the event is provided is the reservation applicant terminal 4 as the acquisition source of schedule information used for specifying the event to be provided.

In a case where a plurality of events has been specified, the reservation processing module 221 provides the plurality of events in a state of being arranged in time series, to the reservation applicant terminal 4.

The reservation processing module 221 accepts a reservation for the event provided to the reservation applicant terminal 4 from the reservation applicant terminal 4. The reservation processing module 221 manages the reservation for the event accepted from the reservation applicant terminal 4.

In a case where a plurality of events is accepted from the reservation applicant terminal 4, the reservation processing module 221 manages reservations for the plurality of accepted events, as one integrated reservation. For example, the events are capable of being managed as follows.

The reservation processing module 221 assigns a common reservation ID to pieces of information regarding the reservations for the plurality of events and integrates the pieces of information. The reservation processing module stores an information group obtained by the integration, as the reservation information 224, in the storage resource 22 of the reservation processing server 2. At this time, individual reservation IDs which respectively correspond to the events may be further assigned in addition to the common reservation ID.

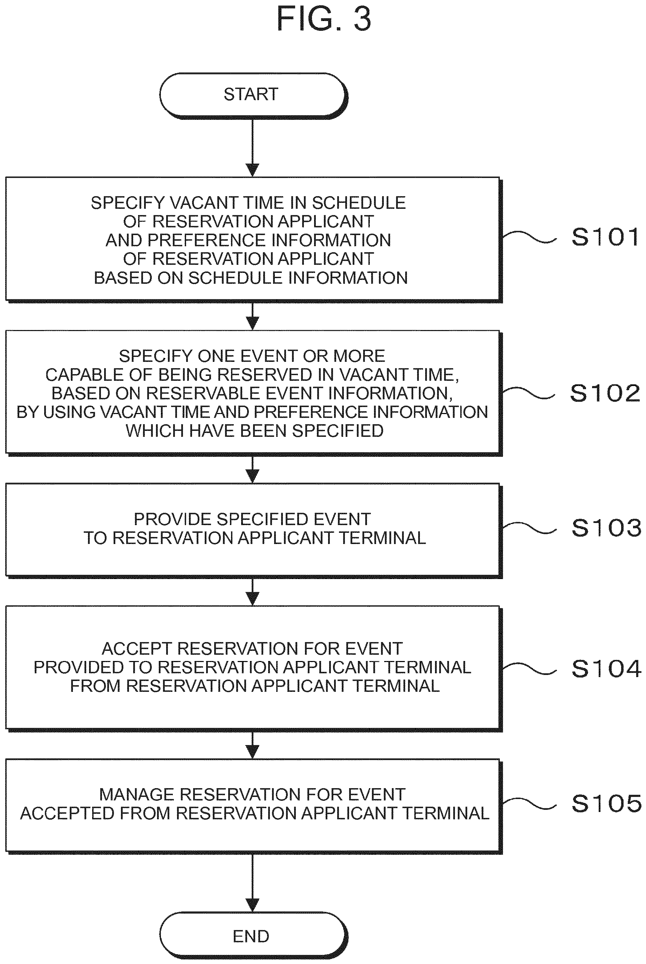

A series of procedures when an event capable of being reserved at the vacant time in the schedule of a reservation applicant is provided to the reservation applicant terminal 4 and a reservation for the provided event is managed will be described with reference to Fig. 3.

Firstly, the reservation processing module 221 specifies a vacant time in the schedule of the reservation applicant and preference information of the reservation applicant, based on the schedule information 225 (Step S101).

Then, the reservation processing module 221 specifies one or more events capable of being reserved in the vacant time, based on the reservable event information 223, by using the vacant time and the preference information which have been specified in Step S101 (Step S102).

The reservation processing module 221 provides the event specified in Step S102 to the reservation applicant terminal 4 (Step S103).

The reservation processing module 221 accepts a reservation for the event provided to the reservation applicant terminal 4 in Step S103, from the reservation applicant terminal 4 (Step S104).

The reservation processing module 221 manages the reservation for the event accepted from the reservation applicant terminal 4 in Step S104 (Step S105).

As described above, according to the reservation processing system 1 in the embodiment, reservable event information 223 regarding an event which is provided by each of providers of different industry types or different business types and is a target of a reservation may be stored in the storage resource 22, schedule information regarding a schedule of the reservation applicant may be acquired from the reservation applicant terminal 4, the vacant time in the schedule of the reservation applicant and preference information of the reservation applicant may be specified based on the acquired schedule information, one or more events capable of being reserved in the vacant time may be specified based on the reservable event information 223, by using the vacant time and the preference information which have been specified, and the specified event may be provided to the reservation applicant terminal 4 as the acquisition source of the schedule information.

Thus, according to the reservation processing system 1 in the embodiment, an event suitable for the preference of the reservation applicant is capable of being provided at the vacant time in the schedule of the reservation applicant.

Further, according to the reservation processing system 1 in the embodiment, it is possible to accept a reservation for an event provided to the reservation applicant terminal 4, and to manage the reservation for the accepted event.

### [Modification Example]

The present invention is not limited to the above-described embodiment and may be implemented in other various forms in a range without departing from the gist of the present invention. Therefore, the embodiment is just an example in all aspects and is not to be interpreted restrictively. For example, the order of the above-described processes (steps) may be randomly changed in a range in which inconsistencies do not occur in the process details, and the processes (steps) may be performed in parallel.

The reservation processing server 2 in the above-described embodiment stores the schedule information 225 in the storage resource 22. However, it is not necessary that the schedule information 225 is stored in the storage resource 22. In a case where the schedule information 225 is not stored in the storage resource 22, the reservation processing module 221 may acquire the schedule of the reservation applicant from the reservation applicant terminal 4 when specifying the vacant time in the schedule of the reservation applicant and preference information of the reservation applicant.

In the above-described embodiment, the reservation acceptor terminal 3 or the reservation applicant terminal 4 accesses a Web page of the reservation processing server 2 and performs processing. However, it is not necessary that the terminal accesses the Web pages and performs the processing. For example, a reservation processing application may be installed on the reservation acceptor terminal 3 or the reservation applicant terminal 4, and thus the various functions in the above-described reservation processing system may be realized. In this case, the reservation acceptor terminal 3 or the reservation applicant terminal 4 may acquire the latest reservable event information, the latest reservation information, and the like from the reservation processing server 2, perform reservation processing and the like by using the acquired latest information, and transmit data processed in the reservation acceptor terminal 3 or the reservation applicant terminal 4, to the reservation processing server 2.

The program in the embodiment may be installed or loaded on a computer by being downloaded through various recording media (computer-readable recording media) such as an optical disk (for example, a CD-ROM), a magnetic disk, and a semiconductor memory or via a communication network or the like.

### Industrial Applicability

The reservation processing device, the reservation processing method, and the reservation processing program according to the present invention are suitable for providing an event suitable for the preference of a user at a vacant time in a schedule.

### Reference Signs List

1 ...reservation processing system, 2...reservation processing server, 3...reservation acceptor terminal, 4...reservation applicant terminal, 20...processor, 21...communication interface, 22...storage resource, 220...computer program, 221...reservation processing module, 222...account information, 223...reservable event information, 224...reservation information, 225...schedule information, N...network

## Claims

1. A reservation processing device comprising:
means for storing reservable event information regarding an event which is provided by each of providers of different industry types or different business types and is a target of a reservation;
means for acquiring schedule information regarding a schedule of a user;
means for specifying a vacant time in the schedule and preference information regarding a preference of the user based on the acquired schedule information;
means for specifying one or more events capable of being reserved in the vacant time from the stored reservable event information at least by using the vacant time and the preference information which have been specified; and
means for providing the specified event to a user terminal as an acquisition source of the schedule information used for specifying the event.

2. The reservation processing device according to claim 1,
wherein, in a case where a plurality of the events is specified, the means for specifying the event further specifies a plurality of the events capable of being reserved together from the plurality of the specified events.

3. The reservation processing device according to claim 2,
wherein the means for specifying the event arranges the plurality of the specified events in time series based on a provision time of the event, which is included in the reservable event information, and further specifies the plurality of events capable of being reserved together based on provision times and provision places of the events, which are included in the reservable event information, a travel time required to move between provision places, and the vacant time.

4. The reservation processing device according to any one of claims 1 to 3, further comprising:
means for acquiring current position information of the user terminal,
wherein the means for specifying the event further uses the acquired current position information of the user terminal when specifying the one or more events capable of being reserved in the vacant time.

5. The reservation processing device according to any one of claims 1 to 4, further comprising:
means for specifying places set in schedules before and after the vacant time based on the acquired schedule information,
wherein the means for specifying the event further uses the specified places when specifying the one or more events capable of being reserved in the vacant time.

6. The reservation processing device according to any one of claims 1 to 5, further comprising:
means for accepting a reservation for the provided event.

7. The reservation processing device according to claim 6, further comprising:
in a case where a plurality of the events is specified,
means for managing reservations for the events, which have been accepted, as one integrated reservation.

8. A reservation processing method executed by a reservation processing device, the method comprising:
a step of acquiring schedule information regarding a schedule of a user;
a step of specifying a vacant time in the schedule and preference information regarding a preference of the user based on the acquired schedule information;
a step of specifying one or more events capable of being reserved in the vacant time at least by using the vacant time and the preference information which have been specified in the specifying step, from reservable event information stored in a storage device that stores the reservable event information regarding an event which is provided by each of providers of different industry types or different business types and is a target of a reservation; and
a step of providing the specified event to a user terminal as an acquisition source of the schedule information used for specifying the event.

9. A reservation processing program causing a computer to function as:
means for storing reservable event information regarding an event which is provided by each of providers of different industry types or different business types and is a target of a reservation;
means for acquiring schedule information regarding a schedule of a user;
means for specifying a vacant time in the schedule and preference information regarding a preference of the user based on the acquired schedule information;
means for specifying one or more events capable of being reserved in the vacant time from the stored reservable event information at least by using the vacant time and the preference information which have been specified; and
means for providing the specified event to a user terminal as an acquisition source of the schedule information used for specifying the event.
